# EUROPÄISCHE PATENTSCHRIFT

(11) **EP 3 856 638 B1**
(45) Veröffentlichungstag und Bekanntmachung des Hinweises auf die Patenterteilung: **13.03.2024**
(21) Anmeldenummer: 19779786.3
(22) Anmeldetag: 24.09.2019
(51) Int. Cl.: B64D 13/00

(54) **LUFTFÜHRUNGSBAUTEIL UND HERSTELLUNGSVERFAHREN**
VENTILATION DUCT AND METHOD OF MANUFACTURING
CONDUIT DE VENTILATION ET PROCÉDÉ POUR SA FABRICATION

(30) Priorität: 24.09.2018 DE 102018007505
(43) Veröffentlichungstag der Anmeldung: 04.08.2021
(60) Teilanmeldung: 24151828.1
(73) Patentinhaber: Diehl Aviation Laupheim GmbH, 88471 Laupheim (DE)
(72) Erfinder: STEINMAYER, Peter, 88477 Schwendi (DE); MAYER, Manuel, 88483 Burgrieden (DE); PFETSCHER, André, 89079 Ulm (DE); ADE, Fabian, 88255 Baienfurt (DE); PFINDER, Dirk, 88481 Balzheim (DE); JANKE, Marco Reyes, 89231 Neu-Ulm (DE); MINÉ, Jean-Baptiste, 89231 Wangen (DE)
(74) Vertreter: Diehl Patentabteilung
(86) Internationale Anmeldenummer: PCT/EP2019/075592
(87) Internationale Veröffentlichungsnummer: WO 2020/064665

(56) Entgegenhaltungen:
- EP-A2- 1 959 209
- WO-A1-2016/004522
- DE-A1-102008 050 546
- DE-A1-102013 002 893

## Beschreibung

Die Erfindung betrifft ein Bauteil zur Luftführung für eine Klimaanlage eines Flugzeugs.

Bisher werden Luftführungsbauteile im Flugzeug aus faserverstärkten Kunststoffen (Kohle- oder Glasfaser in Kunststoffmatrix), als Sandwichaufbau (Faserbauteile und Wabenstrukturen) oder in Hybridbauweise (Kohle- und Glasfaser in Kunststoffmatrix) hergestellt. Komplexe Bauteile (wie z.B. Luftauslässe) werden aus mehreren Einzelbauteilen hergestellt, die aufwendig miteinander gefügt werden.

So werden für die bekannte Herstellung eines solchen Bauteils z.B. mehrere Lagen Prepreg allein oder in Verbindung mit PVDF-Schaum (Polyvinylidenfluorid) oder Wabe und/oder Folie in ein Heißpresswerkzeug eingelegt. Beide Werkzeughälften sind formgebend und die eingelegten Lagen werden unter definiertem Druck und Temperatur gepresst, die Lagen härten aus und verbinden sich miteinander.

Es entstehen zwei Halbschalen, die in einem nachgelagerten Prozessschritt zusammen mit den notwendigen Anbau- und Einbauteilen miteinander verklebt werden.

Aus der DE 10 2016 121 366 A1 ist ein Verkleidungs-Paneel mit einem Paneel Element, einer rechteckigen Durchbrechung und einer Klappe bekannt. Das Verkleidungs-Paneel weist eine Klappe auf, welche drehbar um ein Gelenk ist, welches in das Paneel Element integriert ist, um die rechteckige Durchbrechung zu öffnen und/oder zu schließen.

Aus der EP 1 299 219 B1 ist ein Verfahren zur Herstellung von Formteilen aus Partikelschaum mit einer Deckschicht bekannt.

Aus der DE 20 2012 004 525 U1 ist ein Revisionsklappensystem zum reversiblen Verschließen einer Öffnung in einer Gehäuse-, Wand- oder Deckenverkleidung mit einem Rahmen und einer verriegelbaren Klappe bekannt. Der Rahmen und die verriegelbare Klappe ist aus Partikelschaum hergestellt und wird in ein Gehäuse-, Wand- oder Deckenelement integriert, das ebenfalls aus Partikelschaum hergestellt ist.

Aus der US 2012/0248839 A1 ist eine Kissenstruktur bekannt, die dem Benutzer im Sitzen keine Schmerzen bereitet und die gleichmäßige Atmung fördert.

Aus der WO 2016/004522 A1 ist ein Luftführungsbauteil für eine Klimaanlage eines Fahrzeuges bekannt, welches aus zwei Teilschalen gebildet ist, die wiederum Partikelschau-Teile sind.

Auch aus der EP 1 959 209 A2 ist ein Luftführungsbauteil bekannt, welches ein einen Luftkanal aufweisendes Gehäuse umfasst. Das Gehäuse kann mehrteilig ausgebildet sind, wobei die einzelnen Teile aus Partikelschaum gebildet sein können.

Die DE 10 2008 050 546 A1 offenbart ein Luftführungselement für eine Flugzeugklimaanlage, umfassend ein Verteilerrohr, das eine im Bereich einer Stirnfläche des Verteilerrohrs angeordnete Lufteinlassöffnung sowie eine im Bereich einer Mantelfläche des Verteilerrohrs angeordnete Luftableitungsöffnung aufweist.

Aus der DE 10 2013 002 893 A1 ist ein Luftführungsbauteil für eine Klimaanlage eines Luftfahrzeuges bekannt, das aus einem Faserverbundkunststoff sowie einem Kunststoffschaum gebildet ist.

Aufgabe der vorliegenden Erfindung ist es, Verbesserungen hinsichtlich Luftführungsbauteilen vorzuschlagen.

Die Aufgabe wird gelöst durch ein Bauteil gemäß Patentanspruch 1. Bevorzugte oder vorteilhafte Ausführungsformen der Erfindung ergeben sich aus den weiteren Ansprüchen, der nachfolgenden Beschreibung sowie den beigefügten Figuren.

Das Bauteil dient zur Führung von Luft, also zur Luftführung. Die Luftführung findet innerhalb bzw. bei einer Klimaanlage eines Flugzeuges statt. Derartige Bauteile werden auch Luftführungs- oder Klimabauteile genannt.

Das Bauteil weist mindestens eine Eintrittsöffnung für Luft und eine Vielzahl von Austrittsöffnungen für Luft auf. Insbesondere ist genau eine Eintrittsöffnung vorgesehen. Es sind mehrere Austrittsöffnungen, z.B. auch drei oder vier, vorgesehen. Das Bauteil enthält mindestens zwei Teilschalen, insbesondere genau zwei Teilschalen, insbesondere in Form von Halbschalen.

Die Teilschalen sind in einem Montagezustand bzw. Fertigzustand des Bauteils luftdicht miteinander verbunden. Bei bzw. nach der Verbindung bleiben die Eintrittsöffnungen und die Austrittsöffnungen frei, so dass das Bauteil seine Funktion der internen Luftführung von den Eintrittsöffnungen zu den Austrittsöffnungen erfüllen kann.

Die Teilschalen sind Partikelschaum-Teile, d.h. diese sind bei deren Herstellung aus Partikelschaum gefertigt.

Das Flugzeug ist insbesondere ein Passagierflugzeug. Das Bauteil ist für den Innenraum des Flugzeuges bestimmt bzw. in einem Einbauzustand dort montiert. Der Innenraum ist insbesondere eine Passagierkabine. Das Bauteil ist ein Luftauslassbauteil, d.h. die Luftauslässe münden in einen freien Raum, den Innenraum des Flugzeuges.

Durch die Verwendung von Partikelschaum wird neben einer Gewichtseinsparung auch generell eine Verkürzung der Prozesszeiten bei der Herstellung erreicht. So werden in den o.g. bekannten bzw. etablierten Verfahren die o.g. bekannten Bauteile in einer Heißpresse hergestellt, was etwa 15 Minuten Prozesszeit erfordert. Das Partikelschäumen dagegen dauert bei einem vergleichbaren Bauteil ca. 5 Minuten.

Die Erfindung beruht auf der Erkenntnis, dass sich durch das Aufschäumen von Materialien eine Werkstoffgruppe der Partikelschäume ergibt, welche aufgrund ihrer besonderen Struktur und damit zusammenhängenden Eigenschaften Verwendungsmöglichkeiten anderer Weise und somit neue Einsatzgebiete eröffnet.

Durch die Wahl des richtigen Materials und des Schäumverfahrens können gewünschte Eigenschaften des Schaumstoffes erreicht werden.

Das Herstellen von Partikelschäumen verspricht innerhalb der Gruppe der Polymerschäume ein enormes Leichtbaupotential, da ihr Hauptbestandteil mit über 90 % Luft bildet. Die Dichte eines Partikelschaums kann derzeit in einem Bereich von 8 - 200 g/l variiert werden. Hierdurch kann Einfluss auf weitere Eigenschaften wie die mechanischen Eigenschaften oder thermische Isolierfähigkeit genommen werden. Erfindungsgemäß enthält das Bauteil mindestens ein Strukturteil. Durch Strukturteile können variantenreiche Bauteile geschaffen werden, die durch die Teilschalen alleine nicht realisierbar wären.

Erfindungsgemäß ist das Strukturteil ein Luftleitelement, das eine Luftführung im und/oder am Bauteil bewirkt. So können gewünschte Luftführungseigenschaften im und/oder am Bauteil erreicht werden.

Erfindungsgemäß ist das Luftleitelement ein Auslassteil, das die Vielzahl der Austrittsöffnungen bildet. So können gewünschte Auslasseigenschaften für die entsprechenden Austrittsöffnungen und damit das gesamte Bauteil dargestellt werden. Das Auslassteil ist insbesondere ein Auslassgitter. Die Gitteröffnungen bilden dabei die Austrittsöffnungen. Auslassgitter sind als Auslassteile besonders etabliert.

Erfindungsgemäß ist das Strukturteil ein Partikelschaum-Teil. Die Partikelschaum-Technik wird somit nicht nur für die Teilschalen, sondern auch für die Strukturteile genutzt, weshalb die entsprechenden Vorteile auch für Strukturteile gelten.

In einer bevorzugten Variante dieser Ausführungsform ist das Strukturteil einstückig in eine der Teilschalen integriert. Dies ermöglicht, Strukturteil und Teilschale als integriertes einziges Bauteil gemeinsam zu fertigen. Außerdem kann so die Endmontage des gesamten Bauteils erleichtert werden, da weniger Einzelteile zu handhaben sind.

In einer bevorzugten Ausführungsform, ist eine weiteres Strukturteil ein in den Partikelschaum einer Teilschale eingeschäumtes Strukturteil, das kein Partikelschaum-Teil ist. Somit besteht die Möglichkeit, auch Strukturteile einzubeziehen, die insbesondere nicht oder nur schwer oder unzureichend als Partikelschaum-Teile realisierbar wären. Dies trifft insbesondere für metallische Strukturteile und/oder Halterungselemente als Strukturteile zu.

In einer bevorzugten Variante dieser Ausführungsform ist das Strukturteil eine Buchse oder eine Langlochbuchse. Die Langlochbuchse enthält insbesondere eine entlang des Langlochs gleitbare Gleitbuchse. Eine entsprechende Buchse dient als Festlager, eine entsprechende Langlochbuchse mit Gleitbuchse als Loslager für das Bauteil. Insbesondere mit Hilfe des Loslagers können Dimensionsänderungen durch thermische Ausdehnung zwischen Bauteil und Untergrund, auf welchem das Bauteil befestigt ist, ausgeglichen werden. Hierbei ist zu bedenken, dass insbesondere im Luftfahrtbereich Temperaturspannen von -55°C bis +88°C zu berücksichtigen sind.

In einer bevorzugten Variante der oben genannten Ausführungsform ist das Strukturteil eine die Eintrittsöffnung bildende oder enthaltende oder an der Eintrittsöffnung angebrachte Endmuffe. Mithilfe einer derartigen Endmuffe kann das Bauteil an weitere Luftführungsbauteile angeschlossen werden.

In einer bevorzugten Variante dieser Ausführungsform ist die Endmuffe dadurch im Bauteil befestigt, dass sie formschlüssig zwischen mindestens zwei der Teilschalen aufgenommen ist, wobei die Endmuffe beim Fügen der Teilschalen aneinander zwischen diesen formschlüssig einlegbar ist. Die entsprechenden Teilschalen bilden also zusammen mit der Endmuffe - insbesondere dank an den jeweiligen Komponenten angeformter Passungen, Vorsprüngen, Hinterschnitten, Nuten, Federn, usw. - eine Formschlussverbindung.

Bei Luftauslässen als Bauteilen dient eine Endmuffe insbesondere als Verbindungsstück zu der angrenzenden bzw. luftzuführenden Rohrleitung. Die Endmuffe wird z.B. als Spritzgussteil hergestellt und vor dem Fügevorgang in eine Halbschale gesteckt. Durch das Fügen der beiden Halbschalen entsteht eine verliersichere Verbindung zwischen Endmuffe und Luftauslass. Ein den Formschluss (zusammen mit einem Gegenstück in den Teilschalen) bewirkender Bund an der Muffe überträgt Momente in den Luftauslass und/oder stellt gleichzeitig eine Verdrehsicherung dar.

Insbesondere weist die Endmuffe einen Kragen auf, der in eine Nut in den Teilschalen eingreift. Insbesondere ist zwischen Bauteil und Endmuffe eine Verdrehsicherung realisiert.

In einer bevorzugten Ausführungsform weisen mindestens zwei der Teilschalen zur Verbindung miteinander eine lösbare Steckverbindung auf. Die Steckverbindung ist insbesondere am Rand der Teilschalen platziert. Wie die Teilschalen selbst ist auch die entsprechende Verbindung aus Partikelschaum gefertigt. Insbesondere ist die Verbindung eine Nut- und Feder-Verbindung. Die Steckverbindung bzw. deren Komponenten ist somit einstückiger Teil der jeweiligen Teilschalen und ist somit besonders einfach und günstig herzustellen. Bei der Endmontage werden so keine zusätzlichen Verbindungs- /Dichtungsteile benötigt, um die beiden Teilschalen miteinander zu verbinden und/oder abzudichten. Insbesondere wird die Steckverbindung mit leichtem Übermaß dimensioniert und die elastischen Eigenschaften des Partikelschaums genutzt, um eine Steckverbindung zu realisieren, die eine gewisse Haltekraft aufweist.

In einer bevorzugten Variante dieser Ausführungsform ist die Steckverbindung eine Schnappverbindung (z.B. "snap and click") mit einem im Steckzustand hintergriffenen Hinterschnitt. Insbesondere weist die Nut den Hinterschnitt auf, der von einem Vorsprung der Feder hintergriffen ist. Auch hier werden die elastischen Eigenschaften des Partikelschaums genutzt, um eine für die Schnappverbindung notwendige Flexibilität zu erzielen. Eine entsprechende Schnappverbindung weist eine erhöhte Haltekraft gegenüber einer Nut- und Federverbindung ohne Hinterschnitt auf.

In einer bevorzugten Ausführungsform enthält das Bauteil ein Sicherungselement, das wenigstens zwei der Teilschalen aneinander fixiert. Ein derartiges Sicherungselement ist beispielsweise eine Klammer-, eine Schraubverbindung, eine in den Partikelschaum schneidende Schraube usw. insbesondere wird das Sicherungselement alternativ oder zusätzlich zur oben genannten Steck-/Schnappverbindung realisiert.

In einer bevorzugten Ausführungsform ist der Partikelschaum expandierendes Polypropylen (EPP). Dieses Material ist für den entsprechenden Einsatz besonders geeignet.

Die Erfindung beruht auf folgenden Erkenntnissen, Beobachtungen bzw. Überlegungen und weist noch die nachfolgenden Ausführungsformen auf. Die Ausführungsformen werden dabei teils vereinfachend auch "die Erfindung" genannt.

Die Erfindung beruht auf der Überlegung, Luftführungsbauteile für Klimaanlagen in Flugzeugen in Partikelschaum zu entwickeln, die den Anforderungen der Luftfahrt entsprechen. Die Überlegung besteht weiter darin, möglichst viele Funktionen des Bauteils in den Herstellprozess zu integrieren, um eine schnelle und kostengünstige Herstellung zu erreichen. Außerdem sollen die aufgrund des breiten Temperatureinsatzbereiches des Flugzeuges stark unterschiedlichen thermischen Eigenschaften zwischen Partikelschaum und faserverstärkten Kunststoffen, die zu Eigenspannungen im Schaumbauteil und zu Rissen in dessen Struktur führen können, betrachtet und geeignete Maßnahmen zur Kompensation der thermischen Effekte entwickelt werden.

Gemäß einer Grundidee der Erfindung bestehen die Bauteile aus zwei separat geschäumten Halbschalen aus Expandierendem Polypropylen (EPP). Im Herstellprozess der Halbschalen werden separat hergestellte Bauteile (Strukturteile, (Langloch- )Buchsen), die als Halterungselemente fungieren, mit eingeschäumt. Diese Bauteile dienen als hartes Auflager, definierte Führung des Befestigungselements und Ausreißschutz des Partikelschaums und werden während des Schäumprozesses der Halbschale positionsgenau, formschlüssig und verliersicher umschäumt.

Durch geeignete konstruktive Gestaltung (insbesondere der Wandstärken / Berücksichtigung der möglichen Entformung der Bauteile) der innenliegenden Funktionselemente zur Luftführung (Luftleitelement) können diese im selben Prozessschritt zusammen mit den Halbschalen geschäumt werden. Es ist möglich, die Elemente in einer Halbschale komplett oder nur in jeder Halbschale nur einen Teil davon abzubilden und diese im späteren Fügeprozess miteinander zu verbinden. Die oben beschriebenen eingeschäumten Halterungselemente werden an entsprechenden Positionen mit translatorischem Freiheitsgrad für ein darin montiertes weiteres Gleitlager (Gleitbuchse) ausgeführt. Diese Gleitlager können sich darin bewegen und generieren entsprechend ein Loslager mit translatorischem Freiheitsgrad, wodurch die unterschiedlichen thermischen Längenausdehnungen der Materialien kompensiert werden können.

Die Fügenaht wird bei den beiden Halbschalen als Nut-Feder-Verbindung ausgeführt, sodass eine zunächst lösbare Steckverbindung entsteht. Durch geeignete Gestaltung von Nut und Feder wird schon allein durch das Ineinanderstecken eine stabile Verbindung inklusive Luftdichtigkeit erreicht. Dabei werden die Eigenschaften des Schaumes hinsichtlich Verformbarkeit und Rückstellverhalten ausgenutzt. Über zusätzliche Sicherungselemente können die beiden Halbschalen zusätzlich fixiert werden.

Damit auch für die Einbringung einer Endmuffe als Verbindungsstück zu der angrenzenden Rohrleitung kein nachgelagerter aufwendiger Prozessschritt (wie z.B. Kleben) notwendig ist, wird in den Partikelschaum-Halbschalen eine Nut vorgesehen. Die Endmuffe besitzt einen der Nut entsprechenden Steg (Kragen) und wird während des Fügeprozesses der beiden Halbschalen in die Nut gesteckt und durch das Fügen der Halbschalen entsteht eine verliersichere Verbindung.

Grundidee der Erfindung ist auch die Ausnutzung des Materialverhaltens für die Fügeverbindung der Halbschalen durch geeignete Gestaltung der Nut und Feder. Es ergibt sich ein hochintegrativer Herstellprozess durch Integration weiterer Funktionsbauteile in den Schäumprozess unter Berücksichtigung des thermischen Materialverhaltens. So wird beispielsweise ein vergleichsweise langes Spritzgussteil durch ein Partikelschaum-Teil ersetzt: während das Spritzgussteil im Partikelschaum Probleme zwecks stark unterschiedlicher Längenausdehnungen verursachen würde, gibt es bei "Partikelschaum in Partikelschaum" derartige Probleme nicht. Gemäß entsprechender Überlegungen können auch an geeigneten Stellen des Bauteils Festlager oder Loslager (insbesondere zum thermischen Längenausgleich) vorgesehen werden. Es ergibt sich die Abbildung der Luftführungsgeometrien in Partikelschaum und der daraus resultierenden Gewichtseinsparung, sowie die Einsparung von zusätzlichen Prozessschritten.

Insbesondere werden während des Herstellprozesses einer Luftauslass-Halbschale in Partikelschaum separat hergestellte Bauteile (Buchsen) in die Werkzeugkavität eingelegt und während des Schäumens des eigentlichen Bauteils umschäumt. Es entsteht eine formschlüssige, verliersichere Verbindung zwischen geschäumter Halbschale und eingelegtem Bauteil. Die Buchsen dienen als hartes Auflager, definierte Führung des Befestigungselements (Lochleibung) und Ausreißschutz des Partikelschaums, über die der Luftauslass gehaltert werden kann.

Durch die neue Technologie der Luftführungsbauteile in Partikelschaum entsteht beim Zusammenbau der Luftauslässe mit den Komponenten (Hatrack, Sekundärstruktur, Primärstruktur), auf die montiert wird, eine Verbindung von Materialien mit sehr unterschiedlichen thermischen Längenausdehnungskoeffizienten. Dies führt bei den Schaumbauteilen zu einer um bis zu Faktor fünf und mehr erhöhten Längenausdehnung. Diese Unterschiede generieren Eigenspannungen im Schaumbauteil und können zu Rissen in dessen Struktur führen.

Zur Kompensation werden Langlochbuchsen im Herstellungsprozess der Luftauslasshalbschalen integriert. Diese Langlochbuchsen haben eine der Längenausdehnung angepasste Größe. In diese Langlochbuchsen werden Gleitbuchsen montiert und generieren somit ein Loslager mit translatorischem Freiheitsgrad. Die Befestigung des Luftauslasses erfolgt dann z.B. über Schrauben durch die Gleitbuchsen.

Durch die Integration der einzelnen Funktionen und die Ausführung der Fügeverbindung als Steckverbindung entsteht ein kostenoptimierter hochintegrativer Herstellprozess.

Gemäß der Erfindung ergibt sich die Herstellung eines Luftauslasses in Partikelschaum, bestehend aus zwei Halbschalen. In die Schalen integriert sind zusätzliche Bauteile zur Halterung und gleichzeitigen Kompensation thermischer Ausdehnungseffekte, sowie die Abbildung verschiedener Luftführungsgeometrien in Partikelschaum. Die Schalen werden über eine Nut-Feder-Verbindung ineinander gesteckt und über zusätzliche Sicherungselemente gesichert.

Gemäß der Erfindung ergeben sich Luftführungsbauteile in Partikelschaumbauweise (EPP) für das Klimasystem in Flugzeugen.

Die Erfindung bietet die Vorteile einer Gewichtsreduktion, Kostenreduktion, Verbesserung der Prozesszeiten, eine integrative Herstellweise und die Anwendung einer neuen Technologie.

Anwendung findet die Erfindung beispielsweise für einen Deckenluftauslass Single Aisle oder einen seitlichen Luftauslass Single Aisle.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: ein Luftführungsbauteil in einer Vormontagestellung mit Endmuffe,
- Figur 2: das Detail II aus Fig. 1 im Montagezustand,
- Figur 3: das Luftführungsbauteil aus Fig. 1 im Montagezustand ohne Endmuffe,
- Figur 4: das Detail IV aus Fig. 3,
- Figur 5: den Querschnitt A-A durch Fig. 4,
- Figur 6: die Anordnung aus Fig. 4 bei Befestigung an einem Untergrund,
- Figur 7: das Detail VII aus Fig. 3,
- Figur 8: den Querschnitt A-A durch Figur 7,
- Figur 9: die Anordnung aus Fig. 7 bei Befestigung an einem Untergrund,
- Figur 10: das Detail X aus Fig. 3 im Querschnitt,
- Figur 11: ein Sicherungselement im Bauteil im Bereich des Details X bei alternativem Querschnitt,
- Figur 12: eine Halbschale des Bauteils aus Fig. 1 ohne Endmuffe aber mit Luftleitelement.

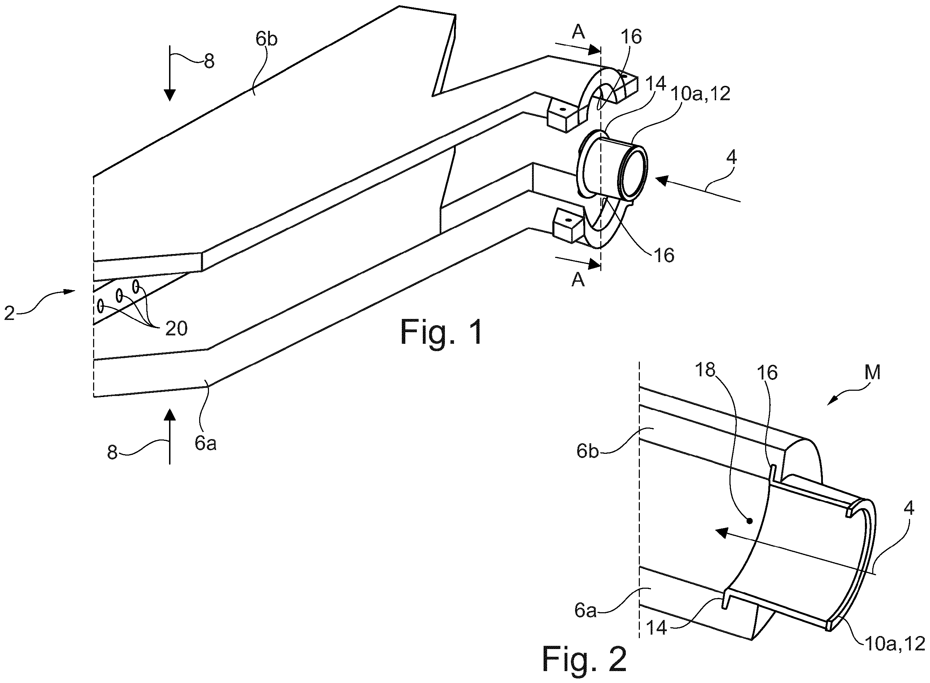

Figur 1 zeigt ein Bauteil 2 zur Führung von Luft 4 (im Betrieb), angedeutet durch einen Pfeil. Das Bauteil 2 ist ein Bauteil für eine nicht weiter dargestellte Klimaanlage eines Flugzeuges. Das Bauteil 2 enthält zwei Teilschalen 6a,b, hier in Form von Halbschalen. Die Teilschalen 6a,b sind Partikelschaum-Teile, d.h. aus Partikelschaum gefertigt bzw. hergestellt. Figur 1 zeigt eine Vormontagestellung, d.h. die beiden Teilschalen 6a,b sind noch nicht aneinandergefügt. Zum Zusammenbau werden die Teile in Richtung der Pfeile 8 aufeinander zu bewegt und (an ihren Rändern unter Auslassung von Ein- und Austrittsöffnungen für Luft 4, siehe unten) luftdicht miteinander zum Bauteil 2 verbunden.

Das Bauteil 2 enthält ein Strukturteil 10a, hier eine Endmuffe 12. Die Endmuffe 12 dient als Verbindungstück des Bauteils 2 zu einer angrenzenden, nicht dargestellten Rohrleitung. Im Montagezustand M und Betrieb wird die Luft 4 durch die Endmuffe 12 in das Bauteil 2 geleitet. Vor dem Fügevorgang der beiden Teilschalen 6a,b wird die Endmuffe 12 in die Teilschale 6a oder 6b gesteckt. Hierzu weist die Endmuffe 12 einen Bund 14 auf. Die Teilschalen 6a,b weisen eine entsprechende Nut 16 zur Aufnahme des Bundes 14 auf. Durch das Fügen der beiden Teilschalen 6a,b aneinander in Richtung der Pfeile 8 wird die Endmuffe 12 formschlüssig und verliersicher im restlichen Bauteil 2 aufgenommen.

Figur 2 zeigt das Detail II aus Figur 1 nach dem Fügevorgang im Querschnitt entlang der Ebene A-A und damit den Montagezustand M des Bauteils 2. Das Bauteil 2 weist nun eine Eintrittsöffnung 18 für die Luft 4 auf. Vorliegend weist auch die Endmuffe 12 die Eintrittsöffnung 18 auf bzw. liegt die Endmuffe 12 in der Eintrittsöffnung 18.

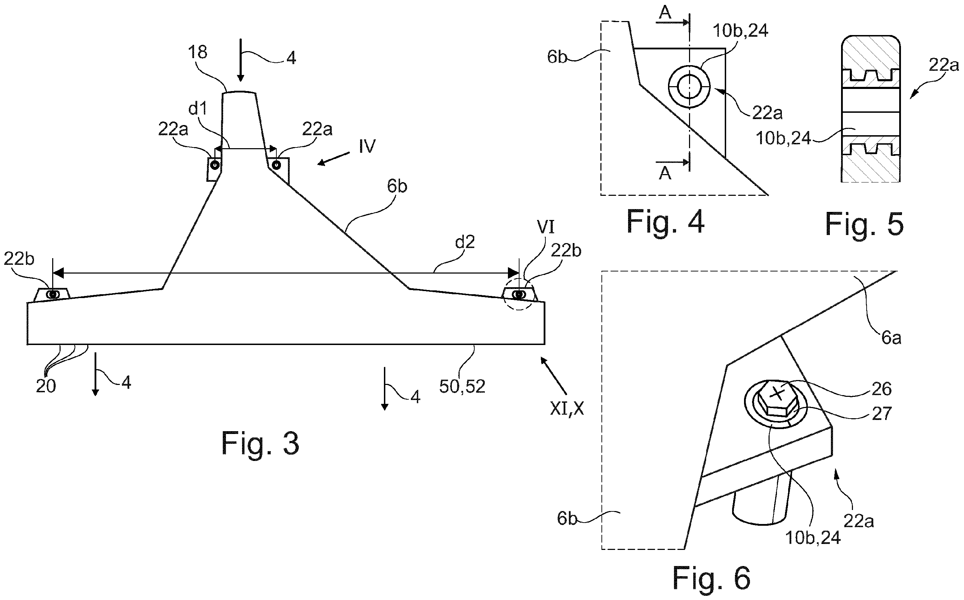

Figur 3 zeigt das gesamte Bauteil 2 im Montagezustand M, allerdings unter Weglassung der Endmuffe 12. Das Bauteil 2 weist eine Vielzahl von Austrittsöffnungen 20 für die Luft 4 auf, die weiter unten näher erläutert werden.

Das Bauteil 2 weist außerdem insgesamt vier Haltepunkte 22a,b auf. Die Haltepunkte 22a,b befinden sich jeweils an nicht näher bezeichneten Fortsätzen bzw. Anformungen des Bauteils 2. Zwei Haltepunkte 22a sind als Festlager, zwei Haltepunkte 22b als Loslager ausgebildet.

Figur 4 zeigt einen der Haltepunkte 22a im Detail IV aus Figur 3. Der Haltepunkt 22a ist dadurch gebildet, dass der Fortsatz bei der Herstellung der Teilschalen 6a und/oder 6b einstückig aus Partikelschaum mit gefertigt wurde und in den Partikelschaum ein weiteres Strukturteil 10b, hier eine Buchse 24, eingeschäumt wurde.

Figur 5 zeigt den Querschnitt entlang der Ebene A-A durch Figur 4. Hier ist zu erkennen, wie die Buchse 24 durch Einschäumen formschlüssig fest in der Teilschale 6a,b bzw. deren Fortsatz gehalten ist.

Figur 6 zeigt, wie das Bauteil 2 mithilfe einer Schraube 26, die durch die Buchse 24 geführt ist, und untergelegter Scheibe 27an einem nicht dargestellten Untergrund verschraubt ist. Aufgrund des vergleichsweise geringen Abstandes d1 von ca. 10cm zwischen den beiden Haltepunkten 22a treten hier kaum Längenänderungen des Bauteils 2 bei Temperaturveränderungen auf, so dass hier feste Buchsen 24 zur Verschraubung ausreichen, ohne nennenswerte Verspannungen im Bauteil 2 hervorzurufen.

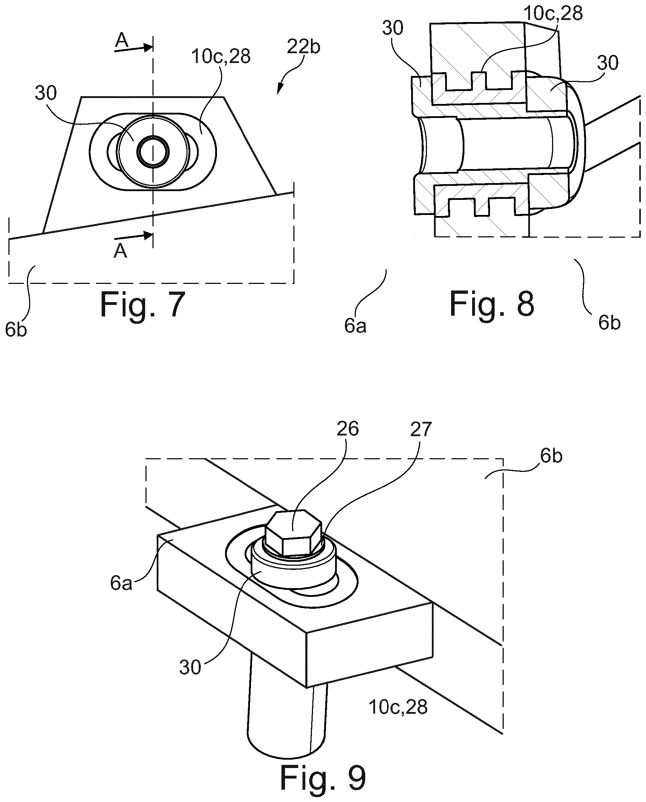

Figur 7 zeigt das Detail VII aus Figur 3 und damit einen der Haltepunkte 22b. Sinngemäß gleich zur Buchse 24, wie oben beschrieben, ist hier jedoch als Strukturteil 10c eine Langlochbuchse 28 in einem angeformten einstückigen Fortsatz der Teilschale 6a,b formschlüssig eingeschäumt. Innerhalb der Langlochbuchse 28 ist eine zweiteilige (um diese montieren zu können) Gleitbuchse 30 verschiebbar gelagert, sodass ein Loslager entsteht.

Figur 8 zeigt den Querschnitt entlang der Ebene A-A durch Figur 7. Hier ist zu erkennen, wie die Langlochbuchse 28 durch Einschäumen fest in der Teilschale 6a,b bzw. deren Fortsatz gehalten ist und wie die zweiteilige Gleitbuchse 30 in der Langlochbuchse 28 linear verschiebbar geführt ist.

Figur 9 zeigt entsprechend Figur 6, wie das Bauteil 2 mithilfe einer Schraube 26, die durch die Gleitbuchse 30 geführt ist, und Scheibe 27an einem nicht dargestellten Untergrund linear beweglich verschraubt ist. Aufgrund des vergleichsweise großen Abstandes d2 von ca. 100cm zwischen den beiden Haltepunkten 22a treten hier merkliche Längenänderungen des Bauteils 2 bei Temperaturveränderungen auf, so dass hier Loslager mit verschiebbaren Gleitbuchsen 30 zur Verschraubung gewählt sind, um nennenswerte Verspannungen im Bauteil 2 zu vermeiden.

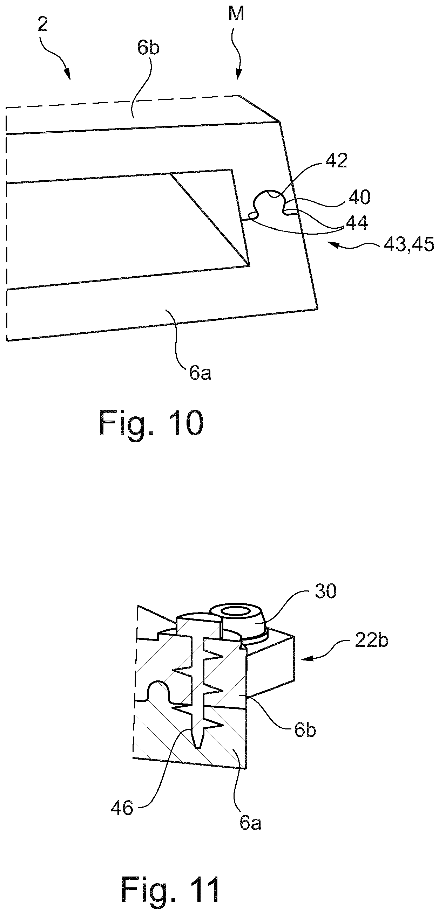

Figur 10 zeigt das Detail X aus Figur 3. An den jeweiligen Randabschnitten (ausgenommen sind nur die Eintrittsöffnung 18 und die Austrittsöffnungen 20 bzw. der Bereich des Luftleitelements 50, siehe unten), an welchen die Teilschalen 6a,b luftdicht miteinander zu verbinden sind, weist die Teilschale 6a eine Feder 40 und die Teilschale 6b eine entsprechende Nut 42 auf. So ist eine Steckverbindung 43 gebildet. Die Feder 40 ist hierbei leicht kreisförmig konvex, die Nut 42 entsprechend konkav ausgestaltet, so dass diese einen Hinterschnitt 44 bildet, der von der Feder 40 im Montagezustand M bzw. Steckzustand der Steckverbindung 43 hintergriffen wird. Die Steckverbindung 43 ist damit als Schnappverbindung 45 ausgeführt.

Die Schnappverbindung 45 ist ausreichend haltbar, um während der Endmontage des Bauteils 2 die Teilschalen 6a, b aneinander zu halten.

Figur 11 zeigt, wie zur endgültigen Sicherung der Teilschalen 6a, b aneinander das Bauteil 2 noch mehrere Sicherungselemente 46 enthält, hier in Form von selbstschneidenden Schrauben, die im Partikelschaum verschraubt sind. Der Übersichtlichkeit halber sind die Sicherungselemente 46 in den restlichen Figuren nicht dargestellt.

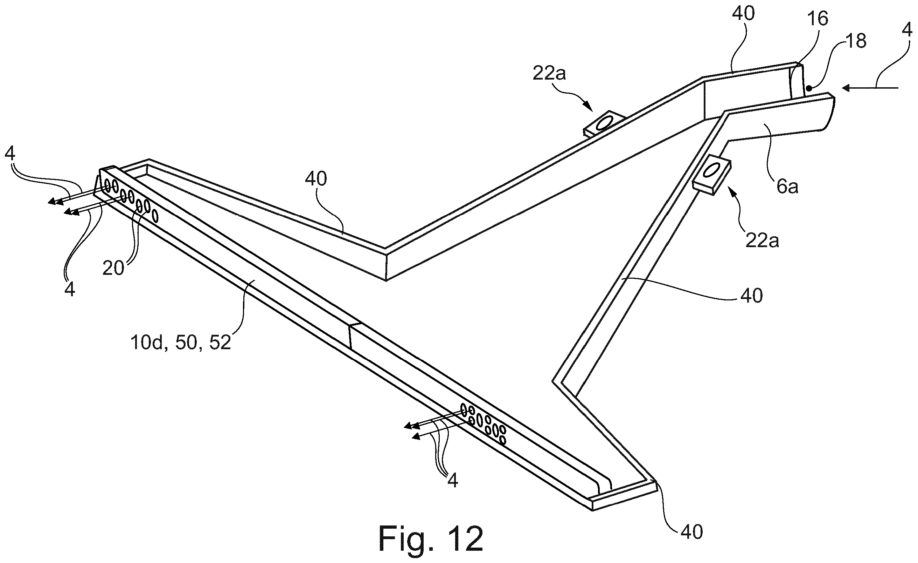

Figur 12 zeigt nochmals die Teilschale 6a im Vormontagezustand. Als weiteres Strukturteil 10d enthält das Bauteil 2 ein in Fig. 1 verdecktes Luftleitelement 50, hier in Form eines Auslassteils 52 bzw. einer Auslassgeometrie. Das Luftleitelement 50 weist die Vielzahl von Austrittsöffnungen 20 des Bauteils 2 auf. Das Strukturteil 10d ist ebenfalls ein Partikelschaum-Teil, das integral zusammen mit der Teilschale 6a gefertigt wurde, also einstückig in die Teilschale 6a integriert ist. Im Gegensatz zu einem Luftleitelement 50, welches zum Beispiel als Spritzgussteil (stark unterschiedliche Längenausdehnung im Vergleich zu Partikelschaum) zwischen Teilschalen 6a, b eingesetzt würde, treten so keine Probleme wegen unterschiedlicher Längenausdehnung von Luftleitelement 50 und Teilschalen 6a,b auf.

### Bezugszeichenliste

- 2: Bauteil
- 4: Luft
- 6a, b: Teilschale
- 8: Pfeil
- 10a-d: Strukturteil
- 12: Endmuffe
- 14: Bund
- 16: Nut
- 18: Eintrittsöffnung
- 20: Austrittsöffnung
- 22a, b: Haltepunkt
- 24: Buchse
- 26: Schraube
- 27: Scheibe
- 28: Langlochbuchse
- 30: Gleitbuchse
- 40: Feder
- 42: Nut
- 43: Steckverbindung
- 44: Hinterschnitt
- 45: Schnappverbindung
- 46: Sicherungselement
- 50: Luftleitelement
- 52: Auslassteil

- M: Montagezustand

## Patentansprüche

1. Bauteil (2) zur Luftführung für eine Klimaanlage eines Flugzeuges, wobei das Bauteil für den Innenraum des Flugzeuges eingerichtet ist und in einem Einbauzustand bestimmungsgemäß dort zu montieren ist, wobei das Bauteil ein Luftauslassbauteil ist,
- mit mindestens einer Eintrittsöffnung (18) und einer Vielzahl von Austrittsöffnungen (20) für Luft (4),
- mit mindestens zwei Teilschalen (6a, b),
- wobei die Teilschalen (6a, b) derart luftdicht miteinander verbunden sind, dass die Eintrittsöffnungen (18) und die Austrittsöffnungen (20) frei bleiben,
- wobei das Bauteil (2) mindestens ein Strukturteil (10a-d) enthält,
- wobei wenigstens eines der Strukturteile (10a-d) ein eine Luftführung im Bauteil bewirkendes Luftleitelement (50) ist,
- wobei das Luftleitelement (50) ein die Vielzahl der Austrittsöffnungen (20) bildendes Auslassteil (52) ist, wobei das Bauteil dazu eingerichtet ist, dass im bestimmungsgemäßen Einbauzustand die Austrittsöffnungen in einen freien Raum, nämlich den Innenraum des Flugzeuges, münden,
**dadurch gekennzeichnet, dass**
- die Teilschalen (6a, b) Partikelschaum-Teile sind, und
das Luftleitelement (50) ein Partikelschaum-Teil ist.

2. Bauteil (2) nach Anspruch 1,
**dadurch gekennzeichnet, dass**
wenigstens eines der Strukturteile (10a-d) einstückig in eine der Teilschalen (6a, b) integriert ist.

3. Bauteil (2) nach einem der vorhergehenden Ansprüche,
**dadurch gekennzeichnet, dass**
wenigstens eines der Strukturteile (10a-d) ein in den Partikelschaum einer Teilschale (6a,b) eingeschäumtes Strukturteil (10a-d) ist, das kein Partikelschaum-Teil ist.

4. Bauteil (2) nach Anspruch 3,
**dadurch gekennzeichnet, dass**
das wenigstens eine der Strukturteile (10a-d) eine Buchse (24) oder eine Langlochbuchse (28) ist.

5. Bauteil (2) nach einem der vorhergehenden Ansprüche,
**dadurch gekennzeichnet, dass**
wenigstens eines der Strukturteile (10a-d) eine die Eintrittsöffnung (18) aufweisende Endmuffe (12) ist.

6. Bauteil (2) nach Anspruch 5,
**dadurch gekennzeichnet, dass**
die Endmuffe (12) dadurch im Bauteil (2) befestigt ist, dass sie formschlüssig zwischen mindestens zwei der Teilschalen (6a,b) aufgenommen ist, wobei die Endmuffe (12) beim Fügen der Teilschalen (6a,b) aneinander zwischen diesen formschlüssig einlegbar ist.

7. Bauteil (2) nach einem der vorhergehenden Ansprüche,
**dadurch gekennzeichnet, dass**
mindestens zwei der Teilschalen (6a,b) zur Verbindung miteinander eine lösbare Steckverbindung (43) aufweisen.

8. Bauteil (2) nach Anspruch 7,
**dadurch gekennzeichnet, dass**
die Steckverbindung (43) eine Schnappverbindung (45) mit einem im Steckzustand hintergriffenen Hinterschnitt (44) ist.

9. Bauteil (2) nach einem der vorhergehenden Ansprüche,
**dadurch gekennzeichnet, dass**
das Bauteil (2) ein Sicherungselement (46) enthält, das wenigstens zwei der Teilschalen (6a,b) aneinander fixiert.

10. Bauteil (2) nach einem der vorhergehenden Ansprüche,
**dadurch gekennzeichnet, dass**
der Partikelschaum expandierendes Polypropylen ist.

## Claims

1. Component (2) for guiding airflow in an airconditioning system of an aircraft, wherein the component is designed for the interior of the aircraft and, in an installed state, should be mounted there as intended, wherein the component is an air outlet component,
- comprising at least one inlet opening (18) and a multiplicity of outlet openings (20) for air (4),
- comprising at least two partial shells (6a, b),
- wherein the partial shells (6a, b) are interconnected in an airtight manner in such a way that the inlet openings (18) and the outlet openings (20) remain free,
- wherein the component (2) contains at least one structural part (10a-d),
- wherein at least one of the structural parts (10a-d) is an air-conducting element (50) bringing about airflow guidance in the component,
- wherein the air-conducting element (50) is an outlet part (52) forming the multiplicity of outlet openings (20), wherein the component is designed such that, in the installed state as intended, the outlet openings open into a free space, namely the interior of the aircraft, **characterized in that**
- the partial shells (6a, b) are particle foam parts, and
- the air-conducting element (50) is a particle foam part.

2. Component (2) according to Claim 1,
**characterized in that**
at least one of the structural parts (10a-d) is integrally integrated in one of the partial shells (6a, b) .

3. Component (2) according to either of the preceding claims,
**characterized in that**
at least one of the structural parts (10a-d) is a structural part (10a-d) which is foamed into the particle foam of a partial shell (6a, b) and is not a particle foam part.

4. Component (2) according to Claim 3,
**characterized in that**
the at least one of the structural parts (10a-d) is a bush (24) or a slot bush (28).

5. Component (2) according to any of the preceding claims,
**characterized in that**
at least one of the structural parts (10a-d) is an end fitting (12) comprising the inlet opening (18).

6. Component (2) according to Claim 5,
**characterized in that**
the end fitting (12) is fastened in the component (2) **in that** it is interlockingly received between at least two of the partial shells (6a, b), the end fitting (12) being able to be interlockingly inserted between the partial shells (6a, b) when the partial shells are joined.

7. Component (2) according to any of the preceding claims,
**characterized in that**
at least two of the partial shells (6a, b) comprise a detachable insertion connection (43) for connection to one another.

8. Component (2) according to Claim 7,
**characterized in that**
the insertion connection (43) is a snap-fit connection (45) comprising an undercut (44) which is engaged behind in the inserted state.

9. Component (2) according to any of the preceding claims,
**characterized in that**
the component (2) contains a securing element (46) which fixes at least two of the partial shells (6a, b) to one another.

10. Component (2) according to any of the preceding claims,
**characterized in that**
the particle foam is expanded polypropylene.

## Revendications

1. Composant (2) pour un guidage d'air pour un système de climatisation d'un aéronef, le composant étant prévu pour l'intérieur de l'aéronef et devant y être monté conformément à sa destination dans un état de montage, le composant étant un composant de sortie d'air,
- avec au moins une ouverture d'entrée (18) et une pluralité d'ouvertures de sortie (20) pour l'air (4),
- avec au moins deux coques partielles (6a, b),
- les coques partielles (6a, b) étant reliées entre elles de manière étanche à l'air de telle sorte que les ouvertures d'entrée (18) et les ouvertures de sortie (20) restent libres,
- le composant (2) contenant au moins une pièce structurelle (10a-d),
- au moins l'une des pièces structurelles (10a-d) étant un élément (50) de guidage d'air qui assure un guidage de l'air dans le composant,
- l'élément (50) de guidage d'air étant une partie de sortie (52) formant la pluralité d'ouvertures de sortie (20), le composant étant conçu de telle sorte que, dans l'état de montage prévu, les ouvertures de sortie débouchent dans un espace libre, à savoir l'espace intérieur de l'aéronef,
**caractérisé en ce que**
- les coques partielles (6a, b) sont des pièces en mousse de particules, et l'élément de guidage d'air (50) est une pièce en mousse de particules.

2. Composant (2) selon la revendication 1,
**caractérisé en ce que**
au moins l'une des pièces structurelles (10a-d) est intégrée d'un seul tenant dans l'une des coques partielles (6a, b).

3. Composant (2) selon l'une des revendications précédentes,
**caractérisé en ce que**
au moins l'une des pièces structurelles (10a-d) est une pièce structurelle (10a-d) intégrée par moussage dans la mousse de particules d'une coque partielle (6a, b), qui n'est pas une pièce de mousse de particules.

4. Composant (2) selon la revendication 3,
**caractérisé en ce que**
au moins une des pièces structurelles (10a-d) est une douille (24) ou une douille à trou oblong (28).

5. Composant (2) selon l'une des revendications précédentes,
**caractérisé en ce que**
au moins une des pièces structurelles (10a-d) est un manchon d'extrémité (12) présentant l'ouverture d'entrée (18) .

6. Composant (2) selon la revendication 5,
**caractérisé en ce que**
le manchon d'extrémité (12) est fixé dans le composant (2) par le fait qu'il est logé par complémentarité de forme entre au moins deux des coques partielles (6a, b), le manchon d'extrémité (12) étant apte à être inséré par complémentarité de forme entre les coques partielles (6a, b) lors de l'assemblage de celles-ci l'une à l'autre.

7. Composant (2) selon l'une des revendications précédentes,
**caractérisé en ce que**
au moins deux des coques partielles (6a, b) présentent un connecteur enfichable amovible (43) pour la liaison entre elles.

8. Composant (2) selon la revendication 7,
**caractérisé en ce que**
le connecteur enfichable (43) est un connecteur à encliquetage (45) avec une contre-dépouille (44) qui s'enclenche par l'arrière à l'état enfiché.

9. Composant (2) selon l'une des revendications précédentes,
**caractérisé en ce que**
le composant (2) contient un élément de sécurité (46) qui fixe au moins deux des coques partielles (6a, b) l'une à l'autre.

10. Composant (2) selon l'une des revendications précédentes,
**caractérisé en ce que**
la mousse de particules est du polypropylène expansé.
